## Europäisches Patentamt
## European Patent Office
## Office européen des brevets

(11) Numéro de publication: **0 056 535**
**B1**

(12) **FASCICULE DE BREVET EUROPEEN**

(45) Date de publication du fascicule du brevet: **29.01.86**

(51) Int. Cl.⁴: **A 01 J 25/00, A 01 J 25/15**

(21) Numéro de dépôt: **81401856.0**

(22) Date de dépôt: **24.11.81**

(54) **Plateau de pressage de bac d'extraction pour la production de fromages à pâte pressée.**

(30) Priorité: **15.01.81 FR 8100610**

(43) Date de publication de la demande: **28.07.82 Bulletin 82/30**

(45) Mention de la délivrance du brevet: **29.01.86 Bulletin 86/05**

(84) Etats contractants désignés: **AT BE CH DE GB IT LI NL**

(56) Documents cités: **AU-B- 447 634 DE-A-2 317 594 US-A-2 193 462**

(73) Titulaire: **PIERRE GUERIN S.A. B.P. 12 F-79210 Mauze sur le Mignon (FR)**

(72) Inventeur: **Quilliou, Guy 20, Square des Frères Montgolfier F-79000 Niort (FR)**

(74) Mandataire: **Fontanié, Etienne FIVES-CAIL BABCOCK 7, rue Montalivet F-75383 Paris Cedex 08 (FR)**

Courier Press, Leamington Spa, England.

## Description

La présente invention concerne les bacs utilisés pour l'égouttage, le pressage et le tranchage du caillé destiné à la production des fromages à pâte pressée.

Ces bacs ont une section rectangulaire et leur fond est recouvert d'un tapis filtrant, métallique ou en matière plastique. Un plateau dont les dimensions sont légèrement inférieures à celles du bac est descendu duns celui-ci, après remplissage et égouttage du caillé, et permet d'exercer une pression sur le gâteau de caillé pour en extraire un volume supplémentaire de sérum.

Dans les appareils connus, on place entre le gâteau de caillé et le plateau un tapis filtrant qui permet l'évacuation d'une partie du sérum et favorise son extraction. Ce tapis doit être mis en place par des ouvriers avant la descente du plateau, enlevé après pressage puis nettoyé pour pouvoir être réutilisé.

Il est courant, par ailleurs, de monter sous le plateau des pulvérisateurs pour le lavage du bac qui doivent être mis en place manuellement avant chaque opération de lavage puis démontés.

On connaît d'autre part, (US—A—2.193.462) un plateau formé d'une série de panneaux filtrants rigides placés côte à côte et assemblés au moyen de deux barres longitudinales. A cause de son manque de rigidité, ce plateau ne permet pas d'exercer des efforts de pressage importants et il n'est pas possible d'y adapter des pulvérisateurs pour le lavage du bac.

Le but de l'invention est d'éliminer les inconvénients des appareils connus et de réaliser un plateau permettant de réduire considérablement les interventions manuelles et de faciliter la conduite et l'entretien du bac.

Le plateau de pressage objet de l'invention est caractérisé en ce que les panneaux filtrants rigides sont portés par un caisson protecteur qui les recouvre sur pratiquement toute leur surface et sont constitués par une surface filtrante et des nervures s'appuyant sur la face inférieure du caisson quand ils sont en position de travail, de façon à ménager entre ladite face du caisson et la surface filtrante des panneaux un espace par où le sérum peut s'écouler pendant le pressage jusqu'à une extrémité du platsqu, les dites nervures étant munies d'ouvertures permettant cet écoulement, en ce que les panneaux filtrants sont solidaires du caisson mais sont montés mobiles par rapport à celui-ci de façon à pouvoir en être écartés pour permettre leur lavage, des systèmes d'accrochage permettant de maintenir les panneaux en position de travail sur le caisson, et en ce que des pulvérisateurs de lavage sont montés à demeure dans l'espace ménagé entre le caisson et la surface filtrante des panneaux.

L'invention permet de supprimer toutes les manutentions qui étaient nécessaires sur les bacs connus pour la mise en place du tapis filtrant sur le gâteau de caillé, pour l'enlever et pour le nettoyer. De plus, les panneaux qui sont de préférence réalisés en acier inoxydable ont une durée de vie nettement supérieure à celle des tapis filtrants habituellement utilisés en sont facilement remplaçables. Par ailleurs, la constitution particulière des panneaux dont la surface filtrante est espacée de la face inférieure du plateau, permet de supprimer l'effet de la poussée d'Archimède sur le plateau, tant que la hauteur du sérum n'excède pas l'épaisesur des panneaux, et la force de pressage est donc appliquée intégralement sur le gâteau de caillé. Enfin, du fait de leur disposition entre le caisson et les panneaux, les pulvérisateurs sont protégés et il n'est pas nécessaire de les démonter avant chaque opération de pressage et de les remettre en place ensuite.

Les panneaux peuvent, par exemple, être montés sur les caisson au moyen d'axes d'articulation horizontaux et traversant des ouvertures allongées prévues à une extrémité des nervures des panneaux perpendiculaires aux dits axes d'articulation de façon à permettre des déplacements des panneaux dans leur plan suivant une direction perpendiculaire à ces axes, et les systèmes d'accrochage peuvent être constitués par des axes solidaires du caisson, parallèles aux axes d'articulation et engagés dans des échancrures prévues à l'autre extrémité des dites nervures et dirigées parallèlement aux dites ouvertures, cette autre extrémité des nervures pouvant être dégagée des dits axes pour permettre l'ouverture des panneaux par déplacement de ces derniers suivant ladite direction.

Suivant un mode de réalisation préfére, les panneaux sont disposés bout-à-bout et les axes d'articulation de chaque panneau, à l'exception d'un premier panneau placé à une extrémité du plateau, constituent les axes d'accrochage du panneau précédent; chaque panneau, lorsqu'il est en position de travail, interdit l'ouverture du panneau suivant et un système de verrouillage interdit l'ouverture du premier panneau.

L'ouverture des panneaux est limitée par des câbles, chaînes, systèmes à coulisse, compas, etc. . .

La surface filtrante formée par les panneaux aura de préférence une largeur supérieure à celle du caisson. Cette caractéristique permet de prévoir un jeu plus important entre les bords du caisson et les parois du bac et, par conséquent, de supprimer les difficultés que pouvaient créer, dans les appareils connus, les déformations du bac.

Les pulvérisateurs ou seulement certains d'entre eux peuvent être montés de manière télescopique sur un raccord vertical et être déplaçables entre une position active située au-dessous du plan défini par la surface filtrante des panneaux en position de travail et une position inactive située au-dessus de ce plan.

D'autres caractéristiques de l'invention apparaîtront à la lecture de la description qui suit et se réfère aux dessins l'accompagnant qui montrent, à titre d'exemple non limitatif, un mode de réalisation de l'invention et sur lesquels:

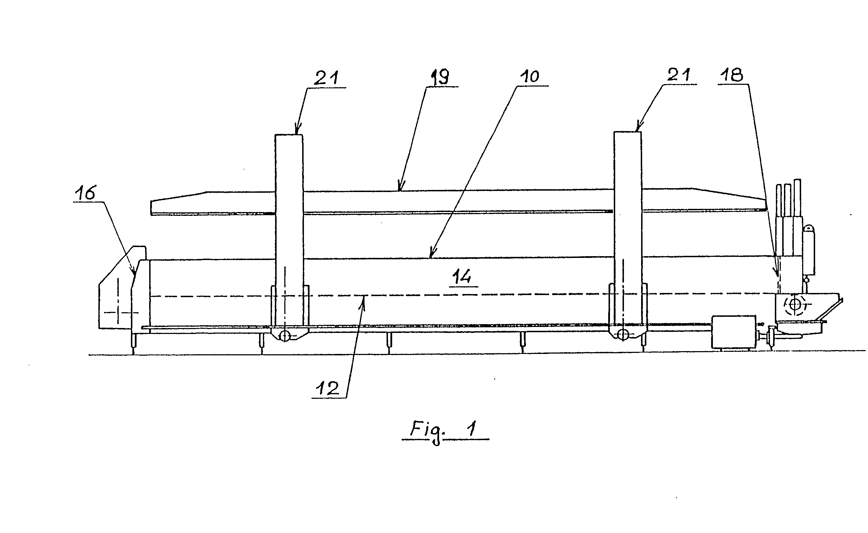

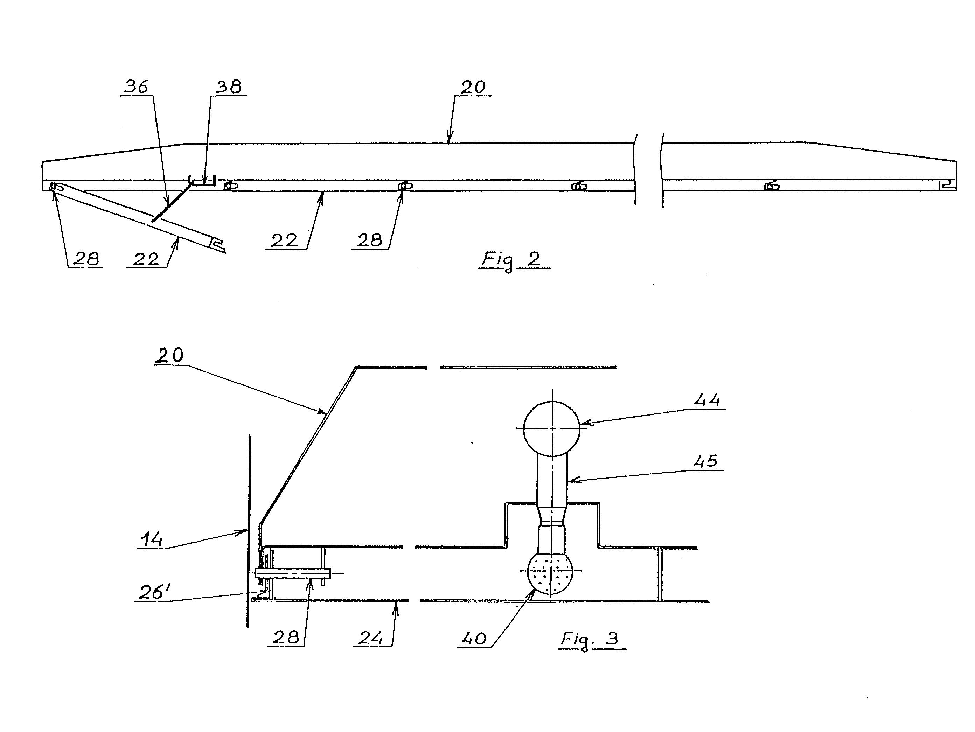

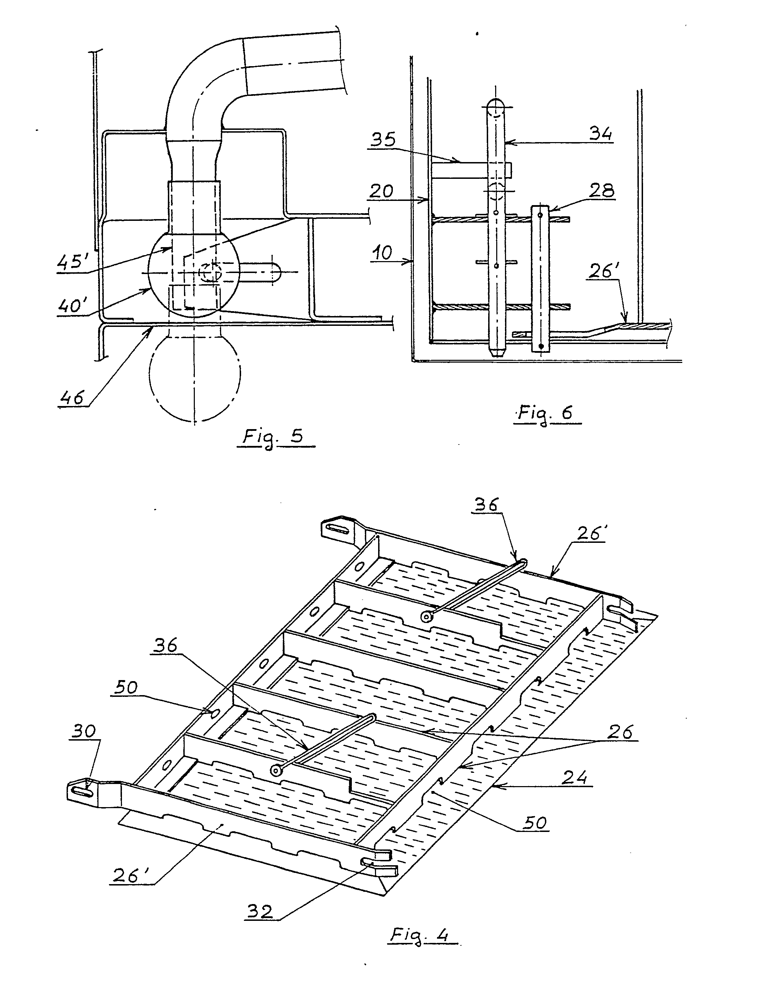

La figure 1 est une vue en élévation d'un bac du type concerné par l'invention; la figure 2 est une vue en élévation, à plus grande échelle, du plateau de pressage du bac de la figure 1; la figure 3 est une coupe transversale du plateau de pressage de la figure 2, représenté à une échelle supérieure; la figure 4 est une vue en perspective d'un des panneaux filtrants équipant le plateau de pressage; la figure 5 est une coupe, suivant le plan vertical médian du plateau, de l'extrémité de ce dernier située à l'aplomb de l'extrémité arrière du bac; et la figure 6 est une coupe par un plan horizontal de la même extrémité de plateau et montre le système de verrouillage des panneaux filtrants.

Le bac 10 représenté sur la figure 1 a une section rectangulaire, sa longueur étant nettement supérieure à sa largeur, et est supporté par un châssis muni de pieds reposant sur le sol. Il est formé d'un fond 12, de deux parois longitudinales 14 et de deux parois d'extrémité dont l'une 16 est fixée au fond et aux parois 14 et l'autre 18 est mobile et constitue une porte que l'on peut ouvrir, en la soulevant au moyen d'un vérin, pour extraire le gâteau de caillé.

Le fond du bac est recouvert d'un tapis filtrant et comporte des rainures aboutissant à des collecteurs pour l'évacuation du liquide ayant filtré à travers le tapis. Le tapis filtrant peut être déplacé sur le fond du bac, après ouverture de la porte 18, pour extraire le gâteau de caillé.

Un plateau 19 dont les dimensions sont légèrement inférieures à celles du bac est utilisé pour presser le caillé après égouttage. Des dispositifs montés sur des piliers 21 sont prévus pour déplacer le plateau verticalement et le presser sur le gâteau de caillé.

Le plateau 19 est constitué par un caisson 20 portant sur sa face inférieure une série de panneaux filtrants 22 dont la largeur est légèrement supérieuré à celle du plateau, comme on le voit sur la figure 3, et qui sont disposés bout-à-bout. Chaque panneau est constitué par une tôle perforée 24, en acier inoxydable, constituant la surface filtrante et qui est renforcée par des nervures longitudinales et transversales 26 prenant appui sur la face inférieure du caisson.

Les panneaux 22 sont supportés à leurs deux extrémités par des axes 29 montés sur le caisson. Ces axes sont engagés, d'une part, dans des ouvertures allongés 30 prévues à une extrémité, qui sera appelée extrémité arrière, des deux nervures longitudinales extérieures 26' des panneaux et, d'autre part, dans des échancrures 32 découpés à l'autre extrémité des mêmes nervures. Chaque jeu d'axes 28, à l'exception de celui situé à l'extrémité du plateau adjacente à la paroi arrière 16 du bac, supporte l'extrémité avant d'un panneau et l'extrémité arrière du panneau voisin.

Les axes longitudinaux des ouvertures 30 et des échancrures 32 sont parallèles au plan des panneaux et leurs positions relatives et l'écartement longitudinal des axes 28 sont choisies de telle sorte qu'on puisse dégager l'extrémité avant des nervures 26' de ces axes en déplaçant les panneaux vers l'arrière, duns leur plan. Normalement, ce recul des panneaux est interdit par deux verrous 34 placés derrière les nervures 26' du premier panneau, qui se trouve près de la paroi arrière 16 du bac (voir figure 6). Quand ces verrous sont en place, aucun panneau ne peut être déplacé vers l'arrière puisque leurs tôles 24 sont jointives et que l'extrémité avant des nervures 26' d'un panneau sert de butée à la nergure transversale arrière de l'autre panneau. Les verrous sont munis d'une poignée et d'un ergot que l'on engage derrière une patte 35 soudée sur le bac pour empêcher leur ouverture intempestive.

Après avoir dégagé les verrous 34, on peut reculer le premier panneau pour dégager son extrémité avant des axes 28 qui la supportent. Celui-ci peut alors pivoter autour des axes supportant son extrémité arrière, comme représenté par la figure 2. On peut ensuite déplacer vers l'arrière le panneau suivant, puis successivement tous les autres panneaux, et les faire pivoter pour les écarter du plateau.

L'ouverture des panneaux est limitée par des tirants 36 en forme d'épingle à cheveux articulée sur les nervures des panneaux et dont l'extrémité supérieure coulisse sur une tige horizontale 38 fixée sur la face inférieure du caisson. D'autres moyens connus tels que câbles, chaînes, compas, pourraient évidemment être utilisés à la place des tirants 36.

Pour remettre les panneaux en place, on effectue les opérations inverses, en commençant par le panneau qui se trouve près de la paroi avant 18 du bac et on verrouille l'ensemble des panneaux au moyen des verrous 34.

Le plateau 19 est en outre équipé de pulvérisateurs 40 logés dans les panneaux 22, entre les nervures 26. Ces pulvérisateurs, qui sont raccordés à une conduite d'alimentation 44 aménagée dans le caisson 20 servent à projeter un liquide de lavage sur les parois et le fond du bac après vidange de ce dernier. Cette opération qui est effectuée avec les panneaux ouverts permet d'assurer simultanément le lavage des panneaux.

Les pulvérisateurs 40 pourraient être montés de manière télescopique sur les raccords 45, comme représenté sur la figure 5 qui montre le pulvérisateur 40' situé à l'extrémité du plateau adjacente à la paroi arrière 16 du bac. Cette extrémité du plateau se trouve à l'aplomb d'une cloison mobile 46, qui délimite le volume utile du bac, quand ce volume est maximum et à l'arrière de cette cloison quand le volume utile est réduit et, par conséquent, elle n'est jamais en contact avec le caillé. C'est pourquoi il subsiste à cette extrémité du plateau une zone étroite qui n'est pas recouverte par un panneau filtrant. Le pulvérisateur 40' placé dans cette zone est muni d'un embout tubulaire qui est monté glissant sur le raccord vertical 45' avec interposition d'un joint assurant l'étanchéité. Des butées limitent les déplacements du pulvérisateur vers le haut et vers le bas.

Lorsque le plateau est relevé et que le pulvérisateur 40' est alimenté sous pression il occupe la position basse représentée en traits discontinus sur la figure 5.

Lorsque le plateau est abaissé pour presser le caillé et qu'il vient en contact avec la cloison mobile 46, le pulvérisateur 40 est repoussé vers le haut, comme représenté en traits pleins sur la figure 5.

Au début du pressage, un volume important de sérum traverse la surface filtrante des panneaux 22 et s'écoule entre celle-ci et la face inférieure du plateau jusqu'à l'extrémité de ce dernier voisine de la paroi fixe 16 du bac; des ouvertures telles que 50 sont prévues dans les nervures des panneaux et les bords du plateau de pressage pour permettre cet écoulement. Une partie du sérum s'écoule aussi entre les parois 14 du bac et bords du caisson.

En fin de pressage, le plateau est relevé puis le gâteau de caillé est découpé et déchargé du bac. Pendant ou après cette opération, les panneaux 22 sont amenés de la position de travail à la position de lavage par deux ouvriers, un de chaque côté du bac, qui, après avoir retiré les verrous 34, déplacent chaque panneau vers l'arrière pour décrocher leur extrémité avant et leur permettre de pivoter vers le bas. Lorsque le bac est vide, on redescend le plateau dans le bac et on alimente les pulvérisateurs 40 et 40' en liquide de lavage. Ces pulvérisateurs sont disposés de telle sorte que toutes les parois et le fond du bac soient atteints par les jets du liquide de lavage; les panneaux 22 reçoivent aussi des jets émis par les pulvérisateurs et sont lavés en même temps que le bac.

Après lavage, le plateau est relevé et les panneaux sont remis en position de travail et verrouillés; les pulvérisateurs qui sont protégés par les panneaux n'ont pas besoin d'être démontés.

**Revendications**

1. Plateau de pressage de bac d'extraction pour la production de fromage à pâte pressée comportant une série de panneaux filtrants rigides placés côte à côte, caractérisé en ce que les panneaux filtrants (22) sont portés par un caisson protecteur (20) qui les recouvre sur pratiquement tout leur surface et sont constitués par une surface filtrante (24) et des nervures (26) s'appuyant sur la face inferieure du caisson quand les panneaux sont en position de travail de façon à ménager entre ladite face du caisson et la surface filtrante des panneaux un espace par où le sérum peut s'écouler pendant le pressage jusqu'à une extrémité du plateau, les dites nervures (26) étant munies d'ouvertures (50) permettant cet écoulement, en ce que les panneaux filtrants (22) sont solidaires du caisson mais sont montés mobiles par rapport à celui-ci de façon à pouvoir en être écartés pour permettre leur lavage, des systèmes d'accrochage (28—32) permettant de maintenir les panneaux en position de travail sur le caisson, et en ce que des pulvérisateurs de lavage (40, 40') sont montés à demeure dans l'espace ménagé entre la surface filtrante des panneaux (22) et le caisson (20).

2. Plateau de pressage selon la revendication 1, caractérisé en ce que les panneaux (22) sont montés sur le caisson au moyen d'axes d'articulation horizontaux (28) traversant des ouvertures allongées (30) prévues à une extrémité de nervures (26') perpendiculaires aux dits axes d'articulation de façon à permettre les déplacements du panneau dans son plan suivant une direction perpendiculaire à ces axes, et en ce que les systèmes d'accrochage sont constitués par des axes (28) solidaires du plateau, parallèles aux axes d'articulation et engagés dans des échancrures (32) prévues à l'autre extrémité des dites nervures et dirigées parallèlement aux dites ouvertures, cette autre extrémité des nervures pouvant être dégagée des dits axes pour permettre l'ouverture des panneaux, par déplacement de ces derniers suivant ladite direction.

3. Plateau de pressage selon la revendication 2, caractérisé en ce que les panneaux (22) sont disposés bout-à-bout et les axes d'articulation (28) de chaque panneau, à l'exception d'un premier panneau placé à une extrémité du plateau, constituent les axes d'accrochage du panneau précédent.

4. Plateau de pressage selon la revendication 3, caractérisé en ce que chaque panneau (22) lorsqu'il est en position de travial, est monté par rapport au panneau suivant de manière à interdire l'ouverture de celui-ci et en ce qu'un système de verrouillage (34) interdit l'ouverture du premier panneau.

5. Plateau de pressage selon l'une quelconque des revendications précédentes, caractérisé en ce qu'il comporte des moyens (36—38) limitant l'ouverture des panneaux (22).

6. Plateau de pressage selon l'une quelconque des revendications précédentes, caractérisé en ce que la surface filtrante (24) des panneaux (22) a une largeur supérieure à celle du caisson (20).

7. Plateau de pressage selon l'une quelconque des revendications précédentes, caractérisé en ce que la surface filtrante des panneaux (22) est constitutée par une tôle perforée en acier inoxydable (24).

8. Plateau de pressage selon l'une quelconque des revendications précédentes, caractérisé en ce qu'il comporte des pulvérisateurs de lavage (40') montés télescopiquement sur un raccord d'alimentation vertical (45') et deplaçables entre une position active située au-dessous du plan défini par la surface filtrante (24) des panneaux (22) en position de travail et une position inactive située au-dessus de ce plan.

**Patentansprüche**

1. Pressdeckel eines Käsetrogs für die Herstellung von Hartkäse, bestehend aus einer Reihe von nebeneinanderliegenden, steifen Filterplaten, dadurch gekennzeichnet, dass die Filterplatten (22) von einem Schutzkasten (20) getragen werden, der nahezu ihre gesamte Fläche überdeckt, und durch eine Filterfläche (24) und Rippen (26) gebildet werden, die sich auf der unteren Seite des Kastens stützen, wenn die Platten in Arbeitsstellung sind, um zwischen der unteren Seite des Kastens und der Filterfläche der Platten einen Raum zu bilden, wo das Serum während des Pressens bis zu einem Ende des Deckels abfliessen kann, wobei die Rippen (26) mit Öffnungen (50) für das Abfliessen versehen sind, dass die Filterplatten (22) mit dem Kasten verbunden, aber dem gegenüber beweglich montiert sind, damit sie davon abgerückt werden können, um gewaschen zu werden, wobei Einhängesysteme (28—32) dazu dienen, die Platten in Arbeitsstellung auf dem Kasten zu halten, und dass Waschspritzdüsen (40, 40') im Raum zwischen der Filterfläche der Platten (22) und dem Kasten (20) dauerhaft montiert sind.

2. Pressdeckel nach Anspruch 1, dadurch gekennzeichnet, dass die Platten (22) auf dem Kasten mittels horizontaler Gelenkachsen (28) montiert sind, die durch Längsöffnungen (30) hindurchgehen, die an einem Ende von zu den Gelekachsen senkrechten Rippen (26') vorgesehen sind, um die Bewegungen der Platte in deren Ebene in einer zu diesen Achsen senkrechten Richtung zu ermöglichen, und dass die Einhängesysteme aus Achsen (28) bestehen, die mit dem Deckel verbunden, zu den Gelenkachsen parallel sind und in am anderen Ende der Rippen vorgesehenen, zu den Längsöffnungen parallele Ausschnitte (32) eingeführt werden, wobei dieses andere Ende der Rippen von den Achsen herausgezogen werden kann, um die Öffnung der Platten durch Verschiebung derselben in der zu den Achsen senkrechten Richtung zu ermöglichen.

3. Pressdeckel nach Anspruch 2, dadurch gekennzeichnet, dass die Platten (22) nebeneinander angeordnet sind, und die Gelenkachsen (28) jeder Platte, mit Ausnahme von einer ersten, an einem Ende des Deckels befindlichen Platte, die Einhängeachsen der vorhergehenden Platte bilden.

4. Pressdeckel nach Anspruch 3, dadurch gekennzeichnet, dass jede Platte (22), wenn sie in Arbeitsstellung ist, der nächsten Platte gegenüber so montiert ist, dass deren Öffnung verhindert ist, und dass ein Verriegelungssystem (34) die Öffnung der ersten Platte verhindert.

5. Pressdeckel nach irgendeinem der vorstehenden Ansprüche, dadurch gekennzeichnet, dass er mit Mitteln (36—38) zur Begrenzung der Öffnung der Platten (22) versehen ist.

6. Pressdeckel nach irgendeinem der vorstehenden Ansprüche, dadurch gekennzeichnet, dass die Filterfläche (24) der Platten (22) breiter ist als der Kasten (20).

7. Pressdeckel nach irgendeinem der vorstehenden Ansprüche, dadurch gekennzeichnet, dass die Filterfläche der Platten (22) aus einem Lochblech (24) aus nichtrostendem Stahl besteht.

8. Pressdeckel nach irgendeinem der vorstehenden Ansprüche, dadurch gekennzeichnet, dass er Waschspritzdüsen (40') aufweist, die auf einem vertikalen Speiseanschlusstutzen (45') teleskopisch montiert sind und zwischen einer aktiven Stellung unterhalb der Ebene der Filterfläche (24) der Platten (22) in Arbeitsstellung und einer inaktiven Stellung oberhalb dieser Ebene bewegliche sind.

## Claims

1. Press-cover of a cheese basin for the production of hard cheese comprising a set of rigid filter panels placed side by side, characterized by the fact that the filter panels (22) are supported by a protective box (20) which covers most of their surface and consist of a filtering surface (24) and ribs (26) resting on the lower face of the box when the panels are in work position so as to provide between the said face of the box and the panel filtering surface a space through which the whey can flow to one end of the press-cover during the pressing process, the said ribs (26) being provided with flow openings (50), and by the fact that the filter panels (22) are integral with the box but mounted mobile with respect to the latter so that they can be moved away to be washed, hooking systems (28—32) being used to hold the panels in work position on the box, and by the fact that wash sprayers (40, 40') are mounted permanently in the space provided between the filter surface of the panels (22) and the box (20).

2. Press-cover as in claim 1, characterized by the fact that the panels (22) are mounted on the box by means of horizontal articulation pins (28) which go through elongated openings (30) provided at one end of ribs (26') perpendicular to the said articulation pins so as to enable the panel to move in its plane in a direction perpendicular to these pins, and by the fact that the hooking systems consist of pins (28) integral with the press-cover, parallel to the articulation pins and inserted into slots (32) provided at the other end of the said ribs and directed parallel to the said openings, it being possible to clear this other end of the ribs from the said pins to open the panels, by moving the latter in the said direction.

3. Press-cover as in claim 2, characterized by the fact that the filter panels (22) are placed end-to-end and that the articulation pins (28) of each panel, except for a first panel located at one end of the press-cover, constitute the hooking pins of the preceding panel.

4. Press-cover as in claim 3, characterized by the fact that each panel (22) when in work position, is mounted with respect to the following panel so as to prevent the opening of the latter and by the fact that a locking system (34) prevents the opening of the first panel.

5. Press-cover as in any of the preceding claims, characterized by the fact that it includes means (36—38) which limit the opening of the panels (22).

6. Press-cover as in any of the preceding claims, characterized by the fact that the filter surface (24) of the panels (22) is wider than that of the box (20).

7. Press-cover as in any of the preceding claims, characterized by the fact that the filter surface of the panels (22) consists of a perforated stainless steel plate.

8. Press-cover as in any of the preceding claims, characterized by the fact that it is fitted with wash sprayers (40') telescopically mounted on a vertical feed coupling (45') and movable between an active position located below the plane defined by the filter surface (24) of the panels (22) in work position and an inactive position located above this plane.

Fig. 1

Fig. 2

Fig. 3

0 056 535

Fig. 5

Fig. 6

Fig. 4